# FASCICULE DE BREVET EUROPEEN

(11) **EP 3 803 083 B1**
(45) Date de publication et mention de la délivrance du brevet: **28.06.2023**
(21) Numéro de dépôt: 19736418.5
(22) Date de dépôt: 28.05.2019
(51) Int. Cl.: F02C 7/266

(54) **PROCÉDÉ DE SURVEILLANCE DES BOUGIES D'ALLUMAGE D'UN TURBOMOTEUR EXPLOITANT UNE MESURE VIBRATOIRE**
VERFAHREN ZUR ÜBERWACHUNG DER ZÜNDKERZEN EINES TURBINENTRIEBWERKS MITTELS EINER SCHWINGUNGSMESSUNG
METHOD FOR MONITORING THE SPARK PLUGS OF A TURBOSHAFT ENGINE USING A VIBRATION MEASUREMENT

(30) Priorité: 29.05.2018 FR 1854573
(43) Date de publication de la demande: 14.04.2021
(73) Titulaire: SAFRAN AIRCRAFT ENGINES, 75015 Paris (FR)
(72) Inventeur: DEMAISON, François, Maurice, Marcel, 77550 MOISSY-CRAMAYEL (FR)
(74) Mandataire: Brevalex
(86) Numéro de dépôt international: PCT/FR2019/051242
(87) Numéro de publication internationale: WO 2019/229364

(56) Documents cités:
- FR-A1- 2 998 003
- US-A1- 2015 036 781
- US-A1- 2017 089 577

## Description

### DOMAINE TECHNIQUE

Le domaine de l'invention est celui de la surveillance de l'état de santé de pièces de turbomoteur d'aéronef. L'invention concerne plus particulièrement la surveillance de l'usure des bougies d'allumage pour chambre de combustion de turbomoteur d'aéronef.

### ÉTAT DE LA TECHNIQUE ANTÉRIEURE

Une bougie d'allumage est un dispositif électrique, présent sur les moteurs à allumage commandé tels que les turbomoteurs d'aéronef, qui provoque l'inflammation d'un mélange gazeux dans une chambre de combustion. Les bougies sont plus particulièrement utilisées pour générer des centaines d'étincelles par minute, désignées par le terme de claquages par la suite.

Chaque étincelle se produit entre deux électrodes. Des particules sont ainsi arrachées aux électrodes à chaque claquage, ce qui entraîne une usure progressive des électrodes. Par ailleurs, les bougies se retrouvent dans la flamme au cours du fonctionnement du moteur, ce qui peut engendrer de la corrosion et des dépôts de cokéfaction sur les électrodes. De plus, les particules fines en circulation dans le mélange gazeux peuvent également provoquer une érosion des électrodes. Les bougies perdent donc en efficacité au cours du temps, jusqu'à ne plus produire assez d'énergie pour assurer l'allumage du mélange gazeux dans la chambre de combustion.

L'usure des bougies n'est pas la seule cause de non-allumage du mélange gazeux. Ainsi, un non-allumage peut par exemple être provoqué par une panne du circuit d'excitation des bougies qui leur délivre des impulsions de claquage sur réception d'une commande d'allumage. Un travail d'investigation doit donc être réalisé pour diagnostiquer la cause de non-allumage.

Afin d'éviter qu'une bougie devenue inefficace introduise sur le décollage d'un vol un retard lié à l'identification d'une telle cause de non-allumage, les bougies sont généralement remplacées de manière préventive en se basant sur une durée de fonctionnement fixe.

Mais une telle maintenance préventive n'est pas satisfaisante. En effet, en adoptant une durée de fonctionnement fixe trop importante, on n'exclut pas le risque d'un échec de l'allumage lié à une usure excessive d'une bougie. Et *a contrario,* en adoptant une durée de fonctionnement fixe trop faible, on risque de remplacer les bougies trop tôt alors qu'elles sont encore parfaitement aptes à assurer l'allumage.

Afin de contourner cette difficulté, il a été proposé de surveiller l'état de santé d'une bougie d'allumage pour en estimer un degré d'usure et en déduire une durée de vie restante avant remplacement conseillé. Cette surveillance de l'état de santé peut consister à compter le nombre de claquages de la bougie pour en estimer un indicateur d'usure et à prendre en compte le contexte de fonctionnement de la bougie (une température moyenne dans l'environnement de la bougie par exemple) pour apporter une pondération d'aggravation à cet indicateur.

Afin de détecter et compter les claquages d'une bougie, il a été proposé dans le document FR 2 968 143 B1 d'exploiter un capteur dédié sensible au signal lumineux émis par la bougie lors de son claquage. Un tel capteur dédié présente nécessairement un surcoût et une masse embarquée plus importante.

### EXPOSÉ DE L'INVENTION

L'invention a pour objectif de proposer une technique pour surveiller l'état de santé d'une bougie d'allumage au moyen d'une détection des claquages de la bougie qui ne nécessite pas d'avoir recours à un capteur spécifiquement dédié à la réalisation de cette fonction de détection.

A cet effet, l'invention propose un procédé selon la revendication 1 de surveillance d'un turbomoteur d'aéronef comportant un capteur de vibration apte à délivrer un signal vibratoire et une bougie d'allumage. Ce procédé comprend, à partir du signal vibratoire délivré par le capteur de vibration, à la fois la détermination d'un niveau de vibration du turbomoteur et la détermination d'un indicateur d'usure de la bougie d'allumage.

Certains aspects préférés mais non limitatifs de ce procédé sont les suivants :
- la détermination de l'indicateur d'usure de la bougie d'allumage comprend les étapes suivantes :
   ∘ filtrage du signal vibratoire délivré par le capteur de vibration ;
   ∘ détection de pics de claquage dans le signal vibratoire filtré ; et
   ∘ caractérisation des pics de claquage détectés ;
- la caractérisation des pics de claquage détectés peut comprendre l'un et/l'autre d'un comptage des pics, d'une détermination d'une amplitude de chacun des pics, d'une détermination d'une fréquence des pics et d'un calcul d'un indicateur d'apériodicité des pics ;
- il comprend l'émission d'une commande d'allumage à destination d'un circuit d'excitation configuré pour délivrer des impulsions de claquage à la bougie d'allumage sur réception de la commande d'allumage et le filtrage du signal vibratoire est mis en oeuvre uniquement lors de l'émission de la commande d'allumage et/ou la détection et la caractérisation des pics de claquage sont mises en oeuvre uniquement lors de l'émission de la commande d'allumage ;
- il comprend, à partir de la caractérisation des pics détectés, la discrimination entre un défaut de la bougie d'allumage et un défaut d'un circuit d'excitation configuré pour délivrer des impulsions de claquage à la bougie d'allumage sur réception d'une commande d'allumage ;
- il comprend la détermination d'un indicateur d'usure consolidé au moyen de la fusion, par un modèle d'endommagement de la bougie, de la caractérisation des pics de claquage et de conditions opératoires de l'allumage du turbomoteur déterminées par exemple à partir de mesures d'au moins un paramètre opératoire parmi une température, une pression, une hygrométrie, une vitesse d'écoulement de jet d'air et un débit d'injection de carburant ;
- le modèle d'endommagement de la bougie détermine un paramètre de pondération à partir des conditions opératoires de l'allumage et pondère l'indicateur d'usure de la bougie d'allumage à l'aide du paramètre de pondération pour déterminer l'indicateur d'usure consolidé.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un schéma représentant un système de surveillance de turbomoteur selon un mode de réalisation possible de l'invention ;
- la figure 2 est un schéma représentant l'enchaînement des étapes d'un procédé de surveillance de turbomoteur selon un mode de réalisation possible de l'invention ;
- les figures 3a, 3b et 3c illustrent respectivement un signal accélérométrique, le signal accélérométrique filtré pour extraire un signal représentatif du claquage d'une bougie et la détection des pics de claquage dans le signal accélérométrique filtré.

### EXPOSÉ DÉTAILLÉ DE MODES DE RÉALISATION PARTICULIERS

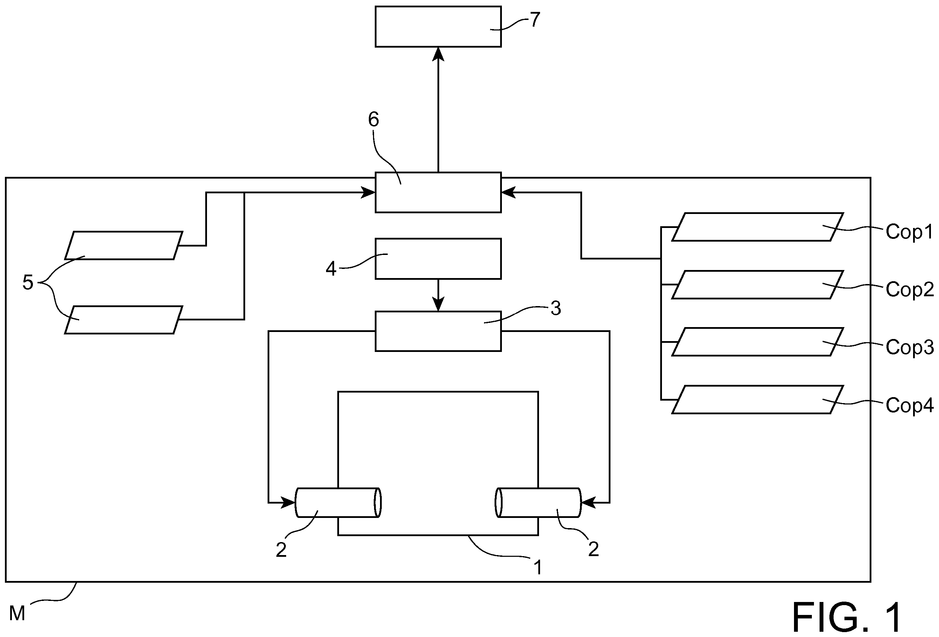

L'invention porte sur un système et un procédé de surveillance d'un turbomoteur d'aéronef. Comme représenté schématiquement sur la figure 1, le turbomoteur M comporte une chambre de combustion 1 dans laquelle une ou plusieurs bougies 2 sont installées afin d'assurer l'allumage d'un mélange d'air et de carburant injecté dans la chambre de combustion. La ou les bougies 2 sont excitées par un circuit d'excitation 3 configuré pour délivrer des impulsions de claquage à la ou aux bougies 2 sur réception d'une commande d'allumage fournie par un circuit de régulation de l'allumage 4.

Le turbomoteur M est par ailleurs équipé d'un ou plusieurs capteurs de vibration 5, généralement deux accéléromètres afin d'assurer une redondance. Ces accéléromètres sont positionnés et utilisés en priorité pour déterminer un niveau vibratoire du turbomoteur.

Le premier accéléromètre est généralement positionné à l'avant du turbomoteur et le second plutôt à l'arrière du turbomoteur, souvent sur un carter afin de pouvoir être accessible en maintenance. L'arbre basse pression (BP) sur lequel est rattachée la soufflante du turbomoteur traverse tout le turbomoteur et un balourd basse pression s'exprime sur les différents roulements qui guident cet arbre, au moins un à l'avant et au moins un à l'arrière. La position exacte des accéléromètres varie d'un moteur à l'autre.

Les signaux délivrés par ces accéléromètres sont fournis à une unité de traitement de données 6 embarquée au sein de l'aéronef (selon les applications, cette unité peut être intégrée ou non au sein du circuit de régulation 4) et qui est en charge de déterminer le niveau vibratoire. Ce niveau vibratoire est transmis au cockpit pour affichage sur le tableau de bord. Le pilote dispose ainsi des informations nécessaires pour réaliser l'équilibrage du moteur.

Les accéléromètres 5 peuvent également être utilisés pour réaliser une surveillance de l'usure de composants moteur comme les roulements. Pour ce faire, des traitements des mesures délivrées par les accéléromètres sont réalisées, par exemple par l'unité de traitement de données 6. Comme représenté sur la figure 1, l'unité de traitement de données 6 peut déterminer des indicateurs de santé (typiquement des résultats de tests statistiques sur les signaux accélérométriques) tandis qu'un calculateur 7, typiquement un calculateur au sol, vient déterminer à partir de ces indicateurs une information représentative de l'endommagement des composants moteur et réaliser le cas échéant un diagnostic de panne.

L'invention propose de ne pas utiliser de capteur dédié à la détection de du claquage des bougies mais de s'appuyer sur le ou les capteurs 5 déjà utilisés pour la mesure du niveau vibratoire afin de détecter ce claquage. Ainsi, l'invention propose un procédé comprenant, à partir du signal vibratoire délivré par un capteur de vibration 5, à la fois la détermination d'un niveau de vibration du turbomoteur et la détermination d'un indicateur d'usure d'une bougie d'allumage 2.

Dans un mode de réalisation possible qui sera pris pour exemple par la suite, ce procédé est mis en oeuvre conjointement par une unité embarquée au sein de l'aéronef, par exemple l'unité de traitement de données 6, en charge de détecter et caractériser les claquages de la bougie et par un calculateur au sol, par exemple le calculateur 7, en charge de déduire l'indicateur d'usure de la bougie à partir de la caractérisation des claquages.

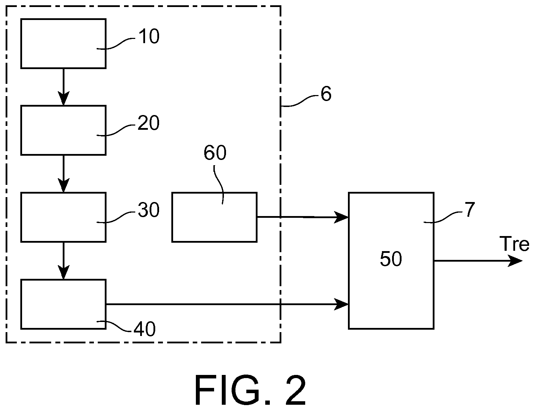

En référence à la figure 2, l'unité de traitement de données 6 procède aux étapes suivantes : une étape 10 d'acquisition du signal vibratoire délivré par un accéléromètre 5, une étape 20 de filtrage du signal vibratoire délivré par l'accéléromètre 5, une étape 30 de détection de pics de claquage dans le signal vibratoire filtré, et une étape 40 de caractérisation des pics de claquage détectés. Cette caractérisation est fournie au calculateur au sol 7 qui en déduit, au cours d'une étape 50, l'indicateur d'usure des bougies, par exemple sous la forme d'un temps restant avant remplacement conseillé Tre.

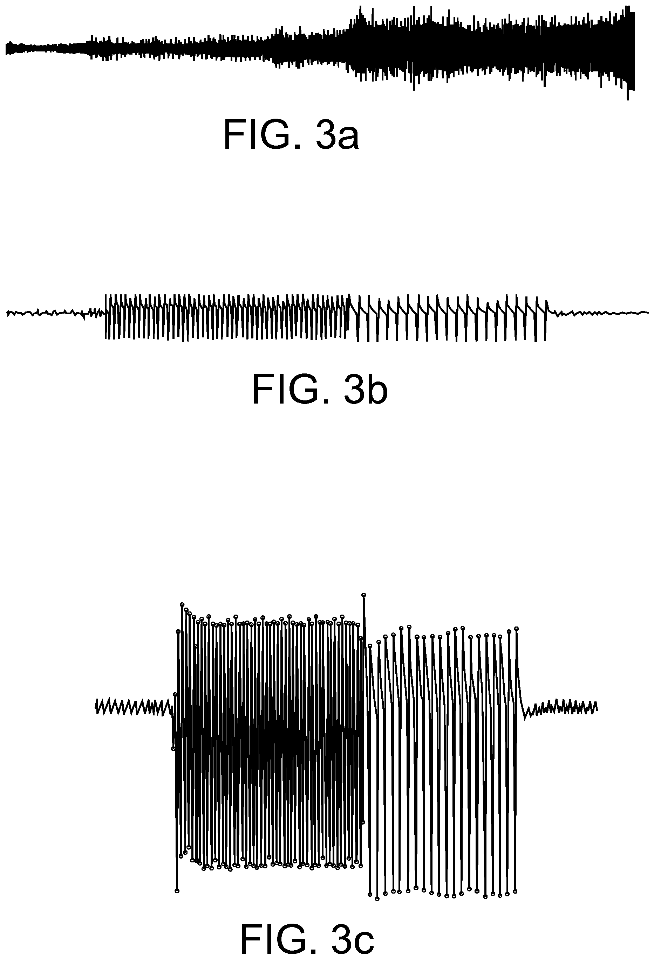

Le claquage d'une bougie vient perturber la mesure de vibration, et l'étape 20 de filtrage du signal vibratoire délivré par l'accéléromètre a pour objectif d'extraire du signal vibratoire un signal représentatif du claquage de la bougie. A titre illustratif, la figure 3a représente un signal vibratoire et la figure 3b représente le résultat du filtrage de signal vibratoire. On retrouve deux phases distinctes sur les figures 3a et 3b: une première phase en mode rafale qui sert à allumer le mélanger gazeux et une deuxième phase (mode normal) à plus basse fréquence de claquage qui sert à maintenir la flamme jusqu'à ce qu'elle soit auto-entretenue.

Le filtrage du signal vibratoire peut n'être réalisé que lors des périodes de temps où les bougies 2 sont commandées en claquage, i.e. pendant les périodes de temps correspondant à l'émission de la commande d'allumage à destination du circuit d'excitation 3 des bougies 2.

Dans un mode de réalisation possible, mis en oeuvre notamment lorsque le capteur de vibration 5 est éloigné de la chambre de combustion et qu'il capte donc peu d'énergie liée au claquage des bougies, un filtrage passe-bas du signal vibratoire est mis en oeuvre pour ne conserver que l'information basse fréquence. A titre d'exemple, un filtre passe-bas ayant une fréquence de coupure de 5 Hz peut être utilisé. Dans une variante de réalisation, un ré-échantillonnage du signal vibratoire, par exemple au moyen d'un filtre anti-repliement, est réalisé avant le filtrage passe-bas. On évite ainsi que le filtrage passe-bas n'introduise des distorsions dans le signal vibratoire échantillonné à haute fréquence (plusieurs dizaines de kHz typiquement).

Dans un autre mode de réalisation possible, mis en oeuvre notamment lorsque le capteur de vibration 5 capte plus d'énergie liée au claquage des bougies et qu'un filtrage passe-bas risque alors de détruire de l'information utile, un filtrage par ondelette est réalisé, soit avec une ondelette standard (par exemple une ondelette de Daubechies) soit avec une ondelette spécifiquement adaptée à la forme du claquage capté par l'accéléromètre.

Une fois le signal vibratoire filtré, l'unité de traitement de données 6 procède à la détection de pics de claquage dans le signal vibratoire filtré. Cette détection est réalisée au moyen de méthodes conventionnelles, comme par exemple une détection d'extrema locaux par changement de signe de la dérivée du signal vibratoire ou par franchissement de seuil. Cette détection peut être restreinte aux périodes temporelles où les bougies 2 sont commandées en claquage, i.e. pendant les périodes temporelles correspondant à l'émission de la commande d'allumage à destination du circuit d'excitation 3 des bougies 2. A titre illustratif, la figure 3c représente la détection des pics dans le signal vibratoire filtré. Dans un mode de réalisation, il est possible d'exclure des pics parasites présentant une amplitude inférieure à un seuil, ce seuil étant par exemple calculé à partir de la médiane de tous les pics positifs.

Une fois les pics détectés, l'unité de traitement de données 6 procède à la caractérisation de ces pics (i.e. à la détermination d'une ou plusieurs caractéristiques des pics). Cette caractérisation comprend typiquement un comptage des pics.

Ce comptage peut s'accompagner :
- d'une détermination d'une amplitude de chacun des pics et de là d'une amplitude moyenne et de son écart-type par phase de claquage (mode rafale et mode normal) ; et/ou
- d'une détermination d'une fréquence des pics à partir d'une durée moyenne séparant chaque claquage sur une fenêtre temporelle correspondant à l'émission de la commande d'allumage, et plus particulièrement pour chaque phase de claquage (mode rafale et mode normal), accompagnée de son écart-type pour chaque phase de claquage.

Cette caractérisation peut également comprendre le calcul d'un indicateur d'apériodicité des pics. Une apériodicité des claquages est représentative d'un défaut du circuit d'excitation et le calcul de cet indicateur permet ainsi de discriminer entre un problème d'usure de la bougie (qui se caractérise notamment par une baisse progressive de l'amplitude des pics) et un problème du circuit d'excitation. Un exemple d'indicateur d'apériodicité est celui du temps maximum entre deux pics ou encore celui d'un compteur sur le nombre de fois où le temps entre deux pics dépasse (éventuellement avec une tolérance, par exemple de 25%) une valeur attendue.

Dans un mode de réalisation possible permettant d'éviter que le filtrage n'introduise des biais (par exemple une réduction de l'amplitude des pics), cette caractérisation est réalisée sur le signal vibratoire lui-même, la détection d'un pic dans le signal vibratoire filtré permettant de dater ce pic et d'identifier un pic correspondant dans le signal vibratoire non filtré.

A l'issue d'un vol par exemple, la caractérisation des pics de claquage est déchargée de l'unité embarquée 6 vers le calculateur au sol 7. Ce dernier se charge de calculer l'indicateur d'usure de la bougie en exploitant cette caractérisation des claquages réalisé au cours du vol et le cas échéant des caractérisations de claquages réalisées au cours de vols précédents. L'usure de la bougie est directement liée au nombre de claquages et le comptage de ceux-ci permet d'estimer une durée de vie restante avant remplacement conseillé. A titre d'exemple, une apériodicité est symptomatique d'une défaillance imminente et requiert un remplacement dès que possible tandis qu'une baisse d'amplitude est symptomatique d'une usure et requiert un remplacement programmé.

Le calculateur 7 peut notamment être configuré pour fusionner, au moyen d'un modèle d'endommagement de la bougie (i.e. une modélisation de la physique de l'usure), la caractérisation des pics de claquage avec des conditions opératoires de l'allumage du turbomoteur pour synthétiser un indicateur d'usure consolidé. Le modèle d'endommagement peut notamment déterminer un paramètre de pondération à partir des conditions opératoires de l'allumage et pondérer l'indicateur d'usure de la bougie d'allumage à l'aide du paramètre de pondération pour synthétiser l'indicateur d'usure consolidé. Le paramètre de pondération caractérise le fait que la bougie a été utilisée, non seulement dans des conditions opératoires nominales, mais également dans des conditions opératoires sévères (fortes pressions ou fortes températures par exemple) venant aggraver son endommagement.

Les conditions opératoires peuvent être déterminées à partir de mesures d'au moins un paramètre opératoire parmi une température, une pression, une hygrométrie, une vitesse d'écoulement de jet d'air et un débit d'injection de carburant. Ces mesures sont acquises lors d'une étape portant la référence 60 sur la figure 2, potentiellement pré-traitées par l'unité embarquée 6 et déchargées vers le calculateur au sol 7 pour y être fusionnées avec l'indicateur d'usure.

A titre d'exemple, le modèle d'endommagement peut, pour déterminer l'indicateur d'usure consolidé, exploiter :
- la caractérisation des pics de claquage,
- une mesure de température à proximité de la chambre de combustion (par exemple une température en entrée de la chambre de combustion et une température à la sortie de la turbine haute pression),
- une mesure de la pression à proximité de la chambre de combustion (par exemple une pression en entrée de la chambre de combustion et une pression en sortie de la chambre de combustion),
- une information d'hygrométrie (extraite par exemple de rapports d'observation météorologiques de type METAR),
- un calcul de la vitesse d'écoulement du jet d'air dans la chambre de combustion (cette vitesse pouvant être estimée à l'aide d'un modèle thermodynamique à partir des régimes de rotation du moteur, de la position des géométries variables, des pressions et températures mesurées au niveau de la soufflante, du compresseur haute pression et, le cas échéant, du compresseur basse pression),
- une information relative au débit de carburant injecté,
- du courant injecté par le circuit d'excitation quand il est mesurable,
- le temps passé à différentes températures et différents débits lorsque les bougies ne claquent pas.

On a pris dans ce qui précède l'exemple d'une mise en oeuvre du procédé par une unité de traitement de données embarquée au sein de l'aéronef pour détecter et caractériser les pics d'allumage et par un calculateur au sol pour déterminer l'indicateur d'usure de la bougie d'allumage. Dans des modes de mise en oeuvre non revendiqués, le procédé peut également être mis en œuvre intégralement par l'unité embarquée, intégralement par le calculateur au sol ou encore selon une répartition différentes de la mise en oeuvre des étapes du procédé entre l'unité embarquée et le calculateur au sol.

L'invention s'étend également à un produit programme d'ordinateur comprenant des instructions de code pour la mise en oeuvre de tout ou partie des étapes du procédé, lorsque ledit programme est exécuté sur un ordinateur, notamment les étapes de filtrage du signal vibratoire, de détection et de caractérisation des pics de claquage.

## Revendications

1. Procédé de surveillance d'un turbomoteur d'aéronef (M) comportant un capteur de vibration (5) apte à délivrer un signal vibratoire et une bougie d'allumage (2), le procédé comprenant, à partir du signal vibratoire délivré par le capteur de vibration, à la fois la détermination d'un niveau de vibration du turbomoteur et la détermination d'un indicateur d'usure (Tre) de la bougie d'allumage, la détermination de l'indicateur d'usure de la bougie d'allumage étant réalisée à partir d'une caractérisation de claquages de la bougie d'allumage détectés dans le signal vibratoire délivré par le capteur de vibration .

2. Procédé selon la revendication 1, dans lequel la détermination de l'indicateur d'usure de la bougie d'allumage comprend les étapes suivantes :
- filtrage (20) du signal vibratoire délivré par le capteur de vibration ;
- détection (30) de pics de claquage dans le signal vibratoire filtré ; et
- caractérisation (40) des pics de claquage détectés.

3. Procédé selon la revendication 2, dans lequel la caractérisation des pics de claquage détectés comprend un comptage des pics.

4. Procédé selon la revendication 2, dans lequel la caractérisation des pics de claquage détectés comprend la détermination d'une amplitude de chacun des pics.

5. Procédé selon la revendication 2, dans lequel la caractérisation des pics de claquage détectés comprend la détermination d'une fréquence des pics.

6. Procédé selon la revendication 5, dans lequel la caractérisation des pics de claquage détectés comprend le calcul d'un indicateur d'apériodicité des pics.

7. Procédé selon l'une des revendications 2 à 6, comprenant l'émission d'une commande d'allumage à destination d'un circuit d'excitation (3) configuré pour délivrer des impulsions de claquage à la bougie d'allumage (2) sur réception de la commande d'allumage et dans lequel le filtrage du signal vibratoire est mis en oeuvre uniquement lors de l'émission de la commande d'allumage.

8. Procédé selon l'une des revendications 2 à 6, comprenant l'émission d'une commande d'allumage à destination d'un circuit d'excitation (3) configuré pour délivrer des impulsions de claquage à la bougie d'allumage sur réception de la commande d'allumage et dans lequel la détection et la caractérisation des pics de claquage sont mises en oeuvre uniquement lors de l'émission de la commande d'allumage.

9. Procédé selon l'une des revendications 2 à 6, comprenant, à partir de la caractérisation des pics détectés, la discrimination entre un défaut de la bougie d'allumage (2) et un défaut d'un circuit d'excitation (3) configuré pour délivrer des impulsions de claquage à la bougie d'allumage sur réception d'une commande d'allumage.

10. Procédé selon l'une des revendications 2 à 9, comprenant la détermination d'un indicateur d'usure consolidé au moyen de la fusion, par un modèle d'endommagement de la bougie, de la caractérisation des pics de claquage et de conditions opératoires de l'allumage du turbomoteur.

11. Procédé selon la revendication 10, dans lequel le modèle d'endommagement de la bougie détermine un paramètre de pondération à partir des conditions opératoires de l'allumage et pondère l'indicateur d'usure de la bougie d'allumage à l'aide du paramètre de pondération pour déterminer l'indicateur d'usure consolidé.

12. Procédé selon l'une des revendications 10 et 11, dans lequel les conditions opératoires sont déterminées à partir de mesures d'au moins un paramètre opératoire parmi une température, une pression, une hygrométrie, une vitesse d'écoulement de jet d'air et un débit d'injection de carburant.

13. Unité de traitement de données (6) configurée pour la mise en oeuvre des étapes de filtrage, de détection et de caractérisation du procédé selon l'une des revendications 2 à 9.

14. Produit programme d'ordinateur comprenant des instructions de code pour la mise en oeuvre des étapes de filtrage, de détection et de caractérisation du procédé selon l'une des revendications 2 à 9, lorsque ledit programme est exécuté sur un ordinateur.

15. Système de surveillance d'un turbomoteur d'aéronef, comprenant une unité de traitement de données (6) selon la revendication 13 embarquée au sein de l'aéronef et un calculateur au sol (7) configuré pour déterminer l'indicateur d'usure de la bougie d'allumage à partir de la caractérisation des pics d'allumage réalisée par ladite unité de traitement de données (6).

## Patentansprüche

1. Verfahren zur Überwachung eines Flugzeug-Turbinentriebwerks (M), das einen Schwingungssensor (5), der imstande ist, ein Schwingungssignal abzugeben, und eine Zündkerze (2) beinhaltet, wobei das Verfahren ausgehend von dem durch den Schwingungssensor abgegebenen Schwingungssignal, sowohl die Bestimmung eines Schwingungsniveaus des Turbinentriebwerks und die Bestimmung eines Verschleißindikators (Tre) der Zündkerze umfasst, wobei die Bestimmung des Verschleißindikators der Zündkerze ausgehend von einer Charakterisierung von Durchschlägen der Zündkerze realisiert wird, die in dem Schwingungssignal erkannt werden, das von dem Schwingungssensor abgegeben wird.

2. Verfahren nach Anspruch 1, wobei die Bestimmung des Verschleißindikators der Zündkerze die folgenden Schritte umfasst:
- Filtern (20) des von dem Schwingungssensor abgegebenen Schwingungssignals;
- Erkennen (30) von Durchschlagspitzen in dem gefilterten Schwingungssignal; und
- Charakterisieren (40) der erkannten Durchschlagspitzen.

3. Verfahren nach Anspruch 2, wobei das Charakterisieren der erkannten Durchschlagspitzen ein Zählen der Spitzen umfasst.

4. Verfahren nach Anspruch 2, wobei das Charakterisieren der erkannten Durchschlagspitzen die Bestimmung einer Amplitude einer jeden der Spitzen umfasst.

5. Verfahren nach Anspruch 2, wobei das Charakterisieren der erkannten Durchschlagspitzen die Bestimmung einer Frequenz der Spitzen umfasst.

6. Verfahren nach Anspruch 5, wobei das Charakterisieren der erkannten Durchschlagspitzen die Berechnung eines Aperiodizitätsindikators der Spitzen umfasst.

7. Verfahren nach einem der Ansprüche 2 bis 6, umfassend die Sendung eines Zündbefehls an eine Ansteuerschaltung (3), die konfiguriert ist, um bei Empfang des Zündbefehls Durchschlagimpulse an die Zündkerze (2) abzugeben, und wobei das Filtern des Schwingungssignals nur beim Senden des Zündbefehls umgesetzt wird.

8. Verfahren nach einem der Ansprüche 2 bis 6, umfassend die Sendung eines Zündbefehls an eine Ansteuerschaltung (3), die konfiguriert ist, um bei Empfang des Zündbefehls Durchschlagimpulse an die Zündkerze abzugeben, und wobei das Erkennen und das Charakterisieren der Durchschlagspitzen nur beim Senden des Zündbefehls umgesetzt werden.

9. Verfahren nach einem der Ansprüche 2 bis 6, umfassend, ausgehend von der Charakterisierung der erkannten Spitzen, die Unterscheidung zwischen einem Fehler der Zündkerze (2) und einem Fehler einer Ansteuerschaltung (3), die konfiguriert ist, um bei Empfang des Zündbefehls Durchschlagimpulse an die Zündkerze abzugeben.

10. Verfahren nach einem der Ansprüche 2 bis 9, umfassend die Bestimmung eines Verschleißindikators, der anhand der Fusion, durch ein Beschädigungsmodell der Kerze, der Charakterisierung der Durchschlagspitzen und von Betriebsbedingungen der Zündung des Turbinentriebwerks konsolidiert wird.

11. Verfahren nach Anspruch 10, wobei das Beschädigungsmodell der Kerze einen Gewichtungsparameter ausgehend von den Betriebsbedingungen der Zündung bestimmt, und den Verschleißindikator der Zündkerze mithilfe des Gewichtungsparameters gewichtet, um den konsolidierten Verschleißindikator zu bestimmen.

12. Verfahren nach einem der Ansprüche 10 und 11, wobei die Betriebsbedingungen ausgehend von Messungen mindestens eines Betriebsparameters aus der Temperatur, einem Druck, einer Hygrometrie, einer Strömungsgeschwindigkeit des Luftstrahls und einer Kraftstoffeinspritzrate bestimmt werden.

13. Datenverarbeitungseinheit (6), die zum Umsetzen der Schritte des Filterns, Erkennens und Charakterisierens des Verfahrens nach einem der Ansprüche 2 bis 9 konfiguriert ist.

14. Computerprogrammprodukt, Codeanweisungen zum Umsetzen der Schritte des Filterns, Erkennens und Charakterisierens des Verfahrens nach einem der Ansprüche 2 bis 9 umfassend, wenn das Programm auf einem Computer ausgeführt wird.

15. System zur Überwachung eines Flugzeug-Turbinentriebwerks, umfassend eine Datenverarbeitungseinheit (6) nach Anspruch 13, die innerhalb des Flugzeugs verbaut ist, und einen Rechner am Boden (7), der zur Bestimmung des Verschleißindikators der Zündkerze ausgehend von der Charakterisierung der Zündspitzen konfiguriert ist, die von der Datenverarbeitungseinheit (6) durchgeführt wird.

## Claims

1. A method for monitoring an aircraft turboshaft engine (M) which comprises a vibration sensor (5) capable of outputting a vibration signal and a spark plug (2), the method comprising, based on the vibration signal output by the vibration sensor, both determining a level of vibration of the turboshaft engine as well as determining a wear indicator (Tre) of the spark plug, the determination of the wear indicator being realized from a breakdown peaks characterization of the spark plug detected in the vibration signal output by the vibration sensor.

2. The method according to claim 1, wherein the determination of the wear indicator comprises the steps of:
filtering (20) of the vibration signal output by the vibration sensor,
detecting (30) breakdown peaks in the filtered vibration signal, and
characterizing (40) the detected breakdown peaks,

3. The method according to claim 2 , wherein the characterizing of the detected breakdown peaks comprises counting the peaks.

4. The method according to claim 2, wherein the characterizing of the detected breakdown peaks comprises determining an amplitude of each detected breakdown peak.

5. The method according to claim 2, wherein the characterizing of the detected breakdown peaks comprises determining a frequency of the peaks.

6. The method according to claim 5, wherein the characterizing of the detected breakdown peaks comprises computing a aperiodicity indicator of the detected breakdown peaks.

7. The method according to any of claim 2 to 6, comprising transmitting an ignition command to an excitation circuit which is configured to output breakdown pulses to the spark plug upon receipt of the ignition command and wherein detecting breakdown peaks and wherein filtering of the vibration signal only implemented when the ignition command is being transmitted.

8. The method according to any of claim 2 to 6, comprising transmitting an ignition command to an excitation circuit which is configured to output breakdown pulses to the spark plug upon receipt of the ignition command and wherein detecting breakdown peaks and wherein the breakdown peaks are only implemented when the ignition command is being transmitted.

9. The method according to any of claim 2 to 6, comprising, from the characterization of the detected peaks, the discrimination between a fault in the spark plug (2) and a fault in an excitation circuit (3 ) configured to deliver breakdown pulses to the spark plug upon receipt of an ignition command.

10. Method according to any of claims 2 to 9, comprising the determination of a consolidated wear indicator by means of the fusion, by a model of damage to the spark plug, of the characterization of the breakdown peaks and of conditions operating procedures for the ignition of the turbine engine.

11. The method of claim 10, wherein the spark plug damage model determines a weighting parameter from ignition operating conditions and weights the spark plug wear indicator using of the weighting parameter to determine the consolidated wear indicator.

12. Method according to one of claims 10 and 11, in which the operating conditions are determined from measurements of at least one operating parameter from among a temperature, a pressure, a hygrometry, a jet flow velocity of air and fuel injection rate.

13. A data processing unit configured to implement the filtering, and detecting and characterizing the steps of the method according to claim 2 to 9.

14. A computer program product comprising code instructions for implementing the filtering, and detecting and characterizing the steps of the method according to claim2 to 9, when said program is executed on a computer.

15. A system for monitoring a turboshaft engine in an aircraft, comprising a data processing unit (6) according to claim13 on the board of the aircraft and a ground based calculator (7) configured to determine the spark plug wear indicator from the characterizing of the ignition peaks
